# EUROPEAN PATENT APPLICATION

(11) **EP 3 550 876 A1**
(43) Date of publication of application: **09.10.2019**
(21) Application number: 17887679.3
(22) Date of filing: 29.12.2017
(51) Int. Cl.: H04W 28/02, H04W 80/10, H04W 88/08

(54) **METHOD AND APPARATUS FOR ESTABLISHING DRB**

(30) Priority: 29.12.2016 US 201662440346 P; 26.01.2017 US 201762451009 P; 16.06.2017 US 201762520576 P; 16.06.2017 US 201762520578 P
(71) Applicant: LG Electronics Inc., Seoul 07336 (KR)
(72) Inventor: BYUN, Daewook, Seoul 06772 (KR); XU, Jian, Seoul 06772 (KR); KIM, Seokjung, Seoul 06772 (KR)
(74) Representative: Frenkel, Matthias Alexander
(86) International application number: PCT/KR2017/015727
(87) International publication number: WO 2018/124810

(57) **Abstract**

Provided are a method for establishing a data radio bearer (DRB) by a base station in a wireless communication system and an apparatus for supporting the same. The method may comprise the steps of: receiving, from an access and mobility function (AMF), quality of service (QoS) information for establishing a default DRB; and establishing the default DRB on the basis of the QoS information.

## Description

### BACKGROUND OF THE INVENTION

### Field of the invention

The present invention relates to a wireless communication system and, most particularly, to a method for establishing a default data radio bearer (DRB) by a base station and an apparatus supporting the same.

### Related Art

QoS corresponds to a technology for easily delivering (or transferring) diverse types of traffic (mail, data transmission (or transfer), audio or video) to a final user in accordance with the attributes of each type of traffic. The most basic QoS parameters correspond to a Bandwidth, a cell transfer delay (CTD), a cell delay variation (CDV) or a cell loss ratio (CLR).

In order to meet the demand for wireless data traffic soring since the 4th generation (4G) communication system came to the market, there are ongoing efforts to develop enhanced 5th generation (5G) communication systems or pre-5G communication systems. For the reasons, the 5G communication system or pre-5G communication system is called the beyond 4G network communication system or post long-term evolution (LTE) system.

### SUMMARY OF THE INVENTION

### Technical Objects

Meanwhile, by explicitly setting up QoS flow to DRB mapping, the base station may control the mapping of a QoS flow to a DRB. For the QoS flow to DRB mapping, the base station shall be capable of setting up DRBs including a default DRB based on QoS information, which is received from a core network. However, even if the current base station receives QoS information from the core network, since the base station is incapable of knowing whether or not the received QoS information corresponds to QoS information for setting up a default DRB, the base station cannot set up a default DRB based on the received QoS information. Therefore, a method of establishing a default DRB by a base station and an apparatus for supporting the same need to be proposed.

### Technical Solutions

According to an exemplary embodiment of the present invention, provided herein is a method for establishing a data radio bearer (DRB) by a base station in a wireless communication system. The method includes the steps of receiving Quality of Service (QoS) information for establishing a default DRB from an access and mobility function (AMF), and establishing the default DRB based on the QoS information.

According to another exemplary embodiment of the present invention, provided herein is a base station establishing a data radio bearer (DRB) in a wireless communication system. The base station may include a memory, a transceiver, and a processor operatively connecting the memory and the transceiver, wherein the processor may control the transceiver so as to allow the transceiver to receive Quality of Service (QoS) information for establishing a default DRB from an access and mobility function (AMF) and may establish the default DRB based on the QoS information.

### EFFECTS OF THE INVENTION

The base station may establish a default DRB.

### BRIEF DESCRIPTION OF THE DRAWINGS

FIG. 1 shows LTE system architecture.
FIG. 2 shows a control plane of a radio interface protocol of an LTE system.
FIG. 3 shows a user plane of a radio interface protocol of an LTE system.
FIG. 4 shows a structure of a 5G system.
FIG. 5 shows a radio interface protocol of a 5G system for a user plane.
FIG. 6 shows mapping between a QoS flow and a DRB.
FIG. 7 shows a method for establishing a default DRB by a base station in a PDU session setup procedure according to an exemplary embodiment of the present invention.
FIG. 8 shows a method for establishing a default DRB by a base station in a PDU session modification procedure according to an exemplary embodiment of the present invention.
FIG. 9a and FIG. 9b show a method for establishing a default DRB by a base station in a handover procedure according to an exemplary embodiment of the present invention.
FIG. 10 shows a method for establishing a default DRB by a base station according to an exemplary embodiment of the present invention.
FIG. 11 is a block diagram illustrating a wireless communication system according to the embodiment of the present invention.

### DESCRIPTION OF EXEMPLARY EMBODIMENTS

The technology described below can be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), etc. The CDMA can be implemented with a radio technology such as universal terrestrial radio access (UTRA) or CDMA-2000. The TDMA can be implemented with a radio technology such as global system for mobile communications (GSM)/general packet ratio service (GPRS)/enhanced data rate for GSM evolution (EDGE). The OFDMA can be implemented with a radio technology such as institute of electrical and electronics engineers (IEEE) 802.11 (Wi-Fi), IEEE 802.16 (WiMAX), IEEE 802.20, evolved UTRA (E-UTRA), etc. IEEE 802.16m is evolved from IEEE 802.16e, and provides backward compatibility with a system based on the IEEE 802.16e. The UTRA is a part of a universal mobile telecommunication system (UMTS). 3rd generation partnership project (3GPP) long term evolution (LTE) is a part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE. 5G is an evolution of the LTE-A.

For clarity, the following description will focus on LTE-A. However, technical features of the present invention are not limited thereto.

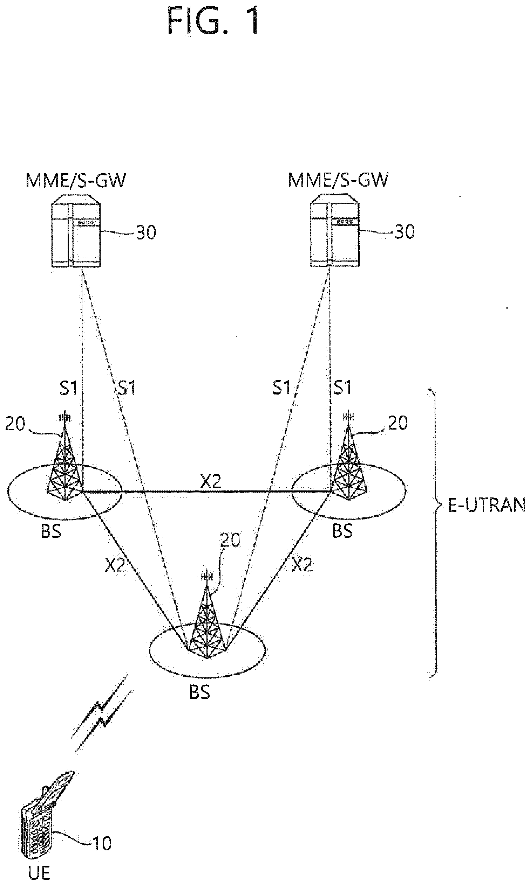

FIG. 1 shows LTE system architecture. The communication network is widely deployed to provide a variety of communication services such as voice over internet protocol (VoIP) through IMS and packet data.

Referring to FIG. 1, the LTE system architecture includes one or more user equipment (UE) (10), an evolved-UMTS terrestrial radio access network (E-UTRAN) and an evolved packet core (EPC). The UE (10) refers to a communication equipment carried by a user. The UE (10) may be fixed or mobile, and may be referred to as another terminology, such as a mobile station (MS), a user terminal (UT), a subscriber station (SS), a wireless device, etc.

The E-UTRAN includes one or more evolved node-B (eNB) (20), and a plurality of UEs may be located in one cell. The eNB (20) provides an end point of a control plane and a user plane to the UE (10). The eNB (20) is generally a fixed station that communicates with the UE (10) and may be referred to as another terminology, such as a base station (BS), a base transceiver system (BTS), an access point, etc. One eNB (20) may be deployed per cell. There are one or more cells within the coverage of the eNB (20). A single cell is configured to have one of bandwidths selected from 1.25, 2.5, 5, 10, and 20 MHz, etc., and provides downlink or uplink transmission services to several UEs. In this case, different cells can be configured to provide different bandwidths.

Hereinafter, a downlink (DL) denotes communication from the eNB (20) to the UE (10), and an uplink (UL) denotes communication from the UE (10) to the eNB (20). In the DL, a transmitter may be a part of the eNB (20), and a receiver may be a part of the UE (10). In the UL, the transmitter may be a part of the UE (10), and the receiver may be a part of the eNB (20).

The EPC includes a mobility management entity (MME) which is in charge of control plane functions, and a system architecture evolution (SAE) gateway (S-GW) which is in charge of user plane functions. The MME/S-GW (30) may be positioned at the end of the network and connected to an external network. The MME has UE access information or UE capability information, and such information may be primarily used in UE mobility management. The S-GW is a gateway of which an endpoint is an E-UTRAN. The MME/S-GW (30) provides an end point of a session and mobility management function for the UE (10). The EPC may further include a packet data network (PDN) gateway (PDN-GW). The PDN-GW is a gateway of which an endpoint is a PDN.

The MME provides various functions including non-access stratum (NAS) signaling to eNBs (20), NAS signaling security, access stratum (AS) security control, Inter core network (CN) node signaling for mobility between 3GPP access networks, idle mode UE reachability (including control and execution of paging retransmission), tracking area list management (for UE in idle and active mode), P-GW and S-GW selection, MME selection for handovers with MME change, serving GPRS support node (SGSN) selection for handovers to 2G or 3G 3GPP access networks, roaming, authentication, bearer management functions including dedicated bearer establishment, support for public warning system (PWS) (which includes earthquake and tsunami warning system (ETWS) and commercial mobile alert system (CMAS)) message transmission. The S-GW host provides assorted functions including per-user based packet filtering (e.g., by deep packet inspection), lawful interception, UE Internet protocol (IP) address allocation, transport level packet marking in the DL, UL and DL service level charging, gating and rate enforcement, DL rate enforcement based on APN-AMBR. For clarity MME/S-GW (30) will be referred to herein simply as a "gateway," but it is understood that this entity includes both the MME and S-GW.

Interfaces for transmitting user traffic or control traffic may be used. The UE (10) and the eNB (20) are connected by means of a Uu interface. The eNBs (20) are interconnected by means of an X2 interface. Neighboring eNBs may have a meshed network structure that has the X2 interface. The eNBs (20) are connected to the EPC by means of an S1 interface. The eNBs (20) are connected to the MME by means of an S1-MME interface, and are connected to the S-GW by means of S1-U interface. The S1 interface supports a many-to-many relation between the eNB (20) and the MME/S-GW.

The eNB (20) may perform functions of selection for gateway (30), routing toward the gateway (30) during a radio resource control (RRC) activation, scheduling and transmitting of paging messages, scheduling and transmitting of broadcast channel (BCH) information, dynamic allocation of resources to the UEs (10) in both UL and DL, configuration and provisioning of eNB measurements, radio bearer control, radio admission control (RAC), and connection mobility control in LTE_ACTIVE state. In the EPC, and as noted above, gateway (30) may perform functions of paging origination, LTE_IDLE state management, ciphering of the user plane, SAE bearer control, and ciphering and integrity protection of NAS signaling.

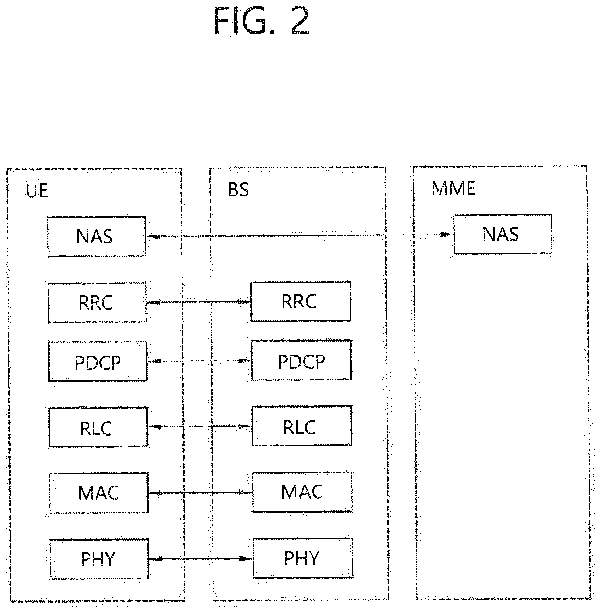

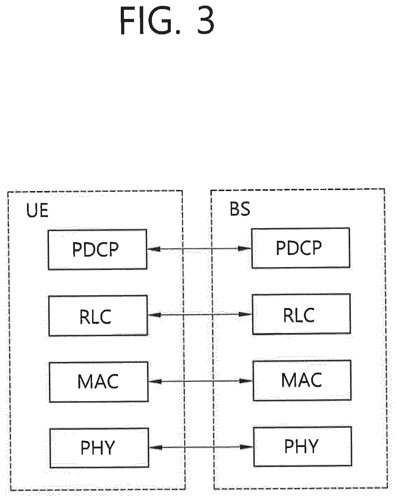

FIG. 2 shows a control plane of a radio interface protocol of an LTE system. FIG. 3 shows a user plane of a radio interface protocol of an LTE system.

Layers of a radio interface protocol between the UE and the E-UTRAN may be classified into a first layer (L1), a second layer (L2), and a third layer (L3) based on the lower three layers of the open system interconnection (OSI) model that is well-known in the communication system. The radio interface protocol between the UE and the E-UTRAN may be horizontally divided into a physical layer, a data link layer, and a network layer, and may be vertically divided into a control plane (C-plane) which is a protocol stack for control signal transmission and a user plane (U-plane) which is a protocol stack for data information transmission. The layers of the radio interface protocol exist in pairs at the UE and the E-UTRAN, and are in charge of data transmission of the Uu interface.

A physical (PHY) layer belongs to the L1. The PHY layer provides a higher layer with an information transfer service through a physical channel. The PHY layer is connected to a medium access control (MAC) layer, which is a higher layer of the PHY layer, through a transport channel. A physical channel is mapped to the transport channel. Data is transferred between the MAC layer and the PHY layer through the transport channel. Between different PHY layers, i.e., a PHY layer of a transmitter and a PHY layer of a receiver, data is transferred through the physical channel using radio resources. The physical channel is modulated using an orthogonal frequency division multiplexing (OFDM) scheme, and utilizes time and frequency as a radio resource.

The PHY layer uses several physical control channels. A physical downlink control channel (PDCCH) reports to a UE about resource allocation of a paging channel (PCH) and a downlink shared channel (DL-SCH), and hybrid automatic repeat request (HARQ) information related to the DL-SCH. The PDCCH may carry a UL grant for reporting to the UE about resource allocation of UL transmission. A physical control format indicator channel (PCFICH) reports the number of OFDM symbols used for PDCCHs to the UE, and is transmitted in every subframe. A physical hybrid ARQ indicator channel (PHICH) carries an HARQ acknowledgement (ACK)/non-acknowledgement (NACK) signal in response to UL transmission. A physical uplink control channel (PUCCH) carries UL control information such as HARQ ACK/NACK for DL transmission, scheduling request, and CQI. A physical uplink shared channel (PUSCH) carries a UL-uplink shared channel (SCH).

A physical channel consists of a plurality of subframes in time domain and a plurality of subcarriers in frequency domain. One subframe consists of a plurality of symbols in the time domain. One subframe consists of a plurality of resource blocks (RBs). One RB consists of a plurality of symbols and a plurality of subcarriers. In addition, each subframe may use specific subcarriers of specific symbols of a corresponding subframe for a PDCCH. For example, a first symbol of the subframe may be used for the PDCCH. The PDCCH carries dynamic allocated resources, such as a physical resource block (PRB) and modulation and coding scheme (MCS). A transmission time interval (TTI) which is a unit time for data transmission may be equal to a length of one subframe. The length of one subframe may be 1 ms.

The transport channel is classified into a common transport channel and a dedicated transport channel according to whether the channel is shared or not. A DL transport channel for transmitting data from the network to the UE includes a broadcast channel (BCH) for transmitting system information, a paging channel (PCH) for transmitting a paging message, a DL-SCH for transmitting user traffic or control signals, etc. The DL-SCH supports HARQ, dynamic link adaptation by varying the modulation, coding and transmit power, and both dynamic and semi-static resource allocation. The DL-SCH also may enable broadcast in the entire cell and the use of beamforming. The system information carries one or more system information blocks. All system information blocks may be transmitted with the same periodicity. Traffic or control signals of a multimedia broadcast/multicast service (MBMS) may be transmitted through the DL-SCH or a multicast channel (MCH).

A UL transport channel for transmitting data from the UE to the network includes a random access channel (RACH) for transmitting an initial control message, a UL-SCH for transmitting user traffic or control signals, etc. The UL-SCH supports HARQ and dynamic link adaptation by varying the transmit power and potentially modulation and coding. The UL-SCH also may enable the use of beamforming. The RACH is normally used for initial access to a cell.

A MAC layer belongs to the L2. The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. A MAC sublayer provides data transfer services on logical channels.

The logical channels are classified into control channels for transferring control plane information and traffic channels for transferring user plane information, according to a type of transmitted information. That is, a set of logical channel types is defined for different data transfer services offered by the MAC layer. The logical channels are located above the transport channel, and are mapped to the transport channels.

The control channels are used for transfer of control plane information only. The control channels provided by the MAC layer include a broadcast control channel (BCCH), a paging control channel (PCCH), a common control channel (CCCH), a multicast control channel (MCCH) and a dedicated control channel (DCCH). The BCCH is a downlink channel for broadcasting system control information. The PCCH is a downlink channel that transfers paging information and is used when the network does not know the location cell of a UE. The CCCH is used by UEs having no RRC connection with the network. The MCCH is a point-to-multipoint downlink channel used for transmitting MBMS control information from the network to a UE. The DCCH is a point-to-point bi-directional channel used by UEs having an RRC connection that transmits dedicated control information between a UE and the network.

Traffic channels are used for the transfer of user plane information only. The traffic channels provided by the MAC layer include a dedicated traffic channel (DTCH) and a multicast traffic channel (MTCH). The DTCH is a point-to-point channel, dedicated to one UE for the transfer of user information and can exist in both uplink and downlink. The MTCH is a point-to-multipoint downlink channel for transmitting traffic data from the network to the UE.

Uplink connections between logical channels and transport channels include the DCCH that can be mapped to the UL-SCH, the DTCH that can be mapped to the UL-SCH and the CCCH that can be mapped to the UL-SCH. Downlink connections between logical channels and transport channels include the BCCH that can be mapped to the BCH or DL-SCH, the PCCH that can be mapped to the PCH, the DCCH that can be mapped to the DL-SCH, and the DTCH that can be mapped to the DL-SCH, the MCCH that can be mapped to the MCH, and the MTCH that can be mapped to the MCH.

An RLC layer belongs to the L2. The RLC layer provides a function of adjusting a size of data, so as to be suitable for a lower layer to transmit the data, by concatenating and segmenting the data received from an upper layer in a radio section. In addition, to ensure a variety of quality of service (QoS) required by a radio bearer (RB), the RLC layer provides three operation modes, i.e., a transparent mode (TM), an unacknowledged mode (UM), and an acknowledged mode (AM). The AM RLC provides a retransmission function through an automatic repeat request (ARQ) for reliable data transmission. Meanwhile, a function of the RLC layer may be implemented with a functional block inside the MAC layer. In this case, the RLC layer may not exist.

A packet data convergence protocol (PDCP) layer belongs to the L2. The PDCP layer provides a function of header compression function that reduces unnecessary control information such that data being transmitted by employing IP packets, such as IPv4 or IPv6, can be efficiently transmitted over a radio interface that has a relatively small bandwidth. The header compression increases transmission efficiency in the radio section by transmitting only necessary information in a header of the data. In addition, the PDCP layer provides a function of security. The function of security includes ciphering which prevents inspection of third parties, and integrity protection which prevents data manipulation of third parties.

A radio resource control (RRC) layer belongs to the L3. The RLC layer is located at the lowest portion of the L3, and is only defined in the control plane. The RRC layer takes a role of controlling a radio resource between the UE and the network. For this, the UE and the network exchange an RRC message through the RRC layer. The RRC layer controls logical channels, transport channels, and physical channels in relation to the configuration, reconfiguration, and release of RBs. An RB is a logical path provided by the L1 and L2 for data delivery between the UE and the network. That is, the RB signifies a service provided the L2 for data transmission between the UE and E-UTRAN. The configuration of the RB implies a process for specifying a radio protocol layer and channel properties to provide a particular service and for determining respective detailed parameters and operations. The RB is classified into two types, i.e., a signaling RB (SRB) and a data RB (DRB). The SRB is used as a path for transmitting an RRC message in the control plane. The DRB is used as a path for transmitting user data in the user plane.

A Non-Access Stratum (NAS) layer placed over the RRC layer performs functions, such as session management and mobility management.

Referring to FIG. 2, the RLC and MAC layers (terminated in the eNB on the network side) may perform functions such as scheduling, automatic repeat request (ARQ), and hybrid automatic repeat request (HARQ). The RRC layer (terminated in the eNB on the network side) may perform functions such as broadcasting, paging, RRC connection management, RB control, mobility functions, and UE measurement reporting and controlling. The NAS control protocol (terminated in the MME of gateway on the network side) may perform functions such as a SAE bearer management, authentication, LTE_IDLE mobility handling, paging origination in LTE_IDLE, and security control for the signaling between the gateway and UE.

Referring to FIG. 3, the RLC and MAC layers (terminated in the eNB on the network side) may perform the same functions for the control plane. The PDCP layer (terminated in the eNB on the network side) may perform the user plane functions such as header compression, integrity protection, and ciphering.

**Hereinafter, a 5G network structure is described.**

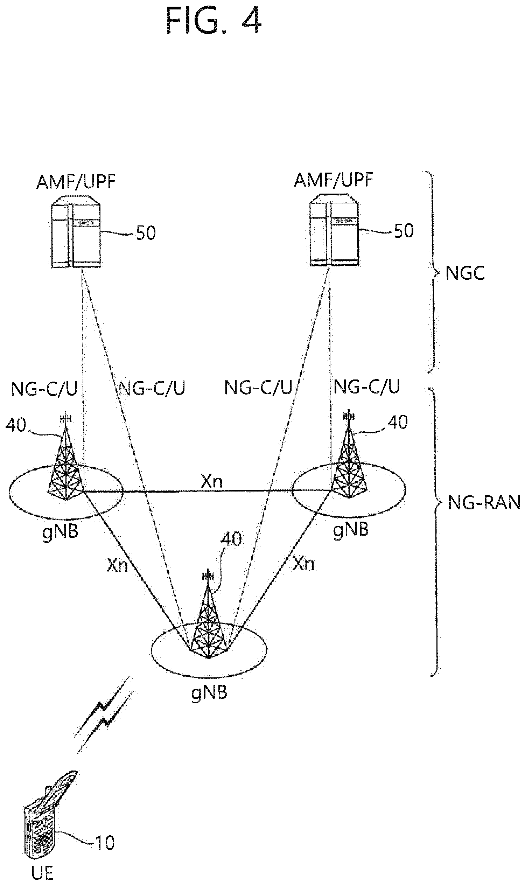

FIG. 4 shows a structure of a 5G system.

In case of an evolved packet core (EPC) having a core network structure of the existing evolved packet system (EPS), a function, a reference point, a protocol, or the like is defined for each entity such as a mobility management entity (MME), a serving gateway (S-GW), a packet data network gateway (P-GW), or the like.

On the other hand, in case of a 5G core network (or a NextGen core network), a function, a reference point, a protocol, or the like is defined for each network function (NF). That is, in the 5G core network, the function, the reference point, the protocol, or the like is not defined for each entity.

Referring to FIG. 4, the 5G system structure includes at least one UE (10), a next generation-radio access network (NG-RAN), and a next generation core (NGC).

The NG-RAN may include at least one gNB (40), and a plurality of UEs may be present in one cell. The gNB (40) provides the UE with end points of the control plane and the user plane. The gNB (40) is generally a fixed station that communicates with the UE (10) and may be referred to as another terminology, such as a base station (BS), a base transceiver system (BTS), an access point, or the like. One gNB (40) may be arranged in every cell. At least one cell may be present in a coverage of the gNB (40).

The NGC may include an access and mobility function (AMF) and a session management function (SMF) which are responsible for a function of a control plane. The AMF may be responsible for a mobility management function, and the SMF may be responsible for a session management function. The NGC may include a user plane function (UPF) which is responsible for a function of a user plane.

Interfaces for transmitting user traffic or control traffic may be used. The UE (10) and the gNB (40) may be connected by means of a Uu interface. The gNBs (40) may be interconnected by means of an X2 interface. Neighboring gNBs (40) may have a meshed network structure based on an Xn interface. The gNBs (40) may be connected to an NGC by means of an NG interface. The gNBs (40) may be connected to an AMF by means of an NG-C interface, and may be connected to a UPF by means of an NG-U interface. The NG interface supports a many-to-many-relation between the gNB (40) and the AMF/UPF (50).

A gNB host may perform functions such as functions for radio resource management, IP header compression and encryption of user data stream, selection of an AMF at UE attachment when no routing to an AMF can be determined from the information provided by the UE, routing of user plane data towards UPF(s), scheduling and transmission of paging messages (originated from the AMF), scheduling and transmission of system broadcast information (originated from the AMF or O&M), or measurement and measurement reporting configuration for mobility and scheduling.

An access and mobility function (AMF) host may perform primary functions such as NAS signaling termination, NAS signaling security, AS security control, inter CN node signaling for mobility between 3GPP access networks, idle mode UE reachability (including control and execution of paging retransmission), tracking area list management (for UE in idle and active mode), AMF selection for handovers with AMF change, access authentication, or access authorization including check of roaming rights.

A user plane function (UPF) host may perform primary functions such as anchor point for Intra-/inter-RAT mobility (when applicable), external PDU session point of interconnect to data network, packet routing & forwarding, packet inspection and user plane part of policy rule enforcement, traffic usage reporting, uplink classifier to support routing traffic flows to a data network, branching point to support multi-homed PDU session, QoS handling for user plane, e.g. packet filtering, gating, UL/DL rate enforcement, uplink traffic verification (SDF to QoS flow mapping), transport level packet marking in the uplink and downlink, or downlink packet buffering and downlink data notification triggering.

A session management function (SMF) host may perform primary functions such as session management, UE IP address allocation and management, selection and control of UP function, configuring traffic steering at UPF to route traffic to proper destination, controlling part of policy enforcement and QoS, or downlink data notification.

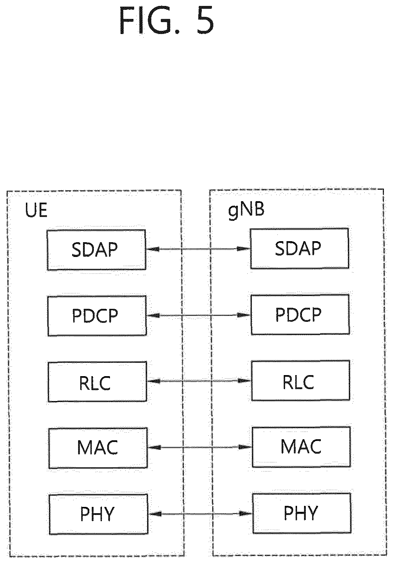

FIG. 5 shows a radio interface protocol of a 5G system for a user plane.

Referring to FIG. 5, in comparison with the LTE system, a radio interface protocol of a 5G system for a user plane may include a new layer, which is referred to as a Service Data Adaptation Protocol (SDAP). The main services and functions of the SDAP layer correspond to mapping between a Quality of Service (QoS) flow and a data radio bearer (DRB) and QoS flow ID (QFI) marking in both DL and UL packets. A single protocol entity of the SDAP may be configured (or setup) for each separate PDU session excluding dual connectivity in which two entities may be configured.

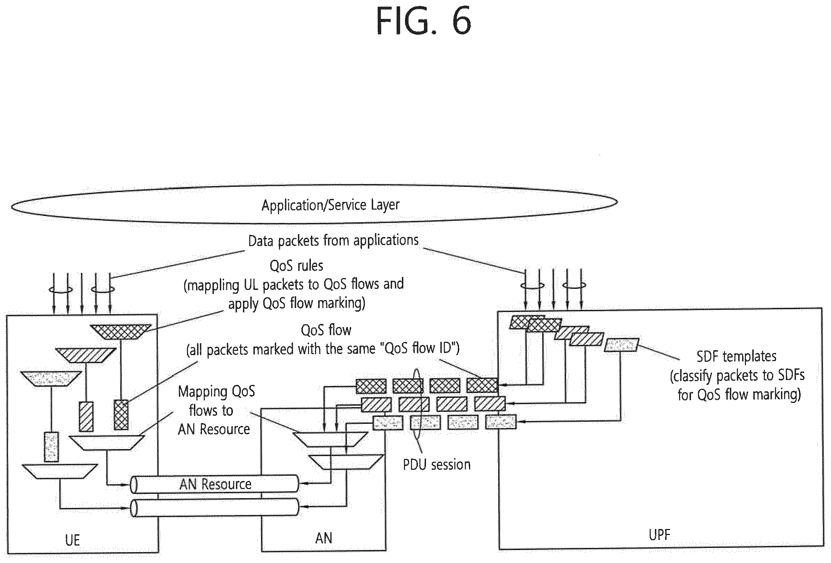

FIG. 6 shows mapping between a QoS flow and a DRB.

In an uplink, the base station may control the mapping of the QoS flow to the DRB by using any one of reflective mapping and explicit configuration. In case of reflective mapping, for each DRB, a UE monitors a QoS flow ID of a downlink (DL) packet and may apply the same mapping in the uplink. In order to enable reflective mapping, the base station may mark DL packets over Uu with a QoS flow ID. Conversely, in case of explicit configuration, the base station may configure a QoS flow to DRB mapping. In this specification, the QoS flow to DRB mapping may be used as a same concept of flow to DRB mapping or QoS flow ID to DRB mapping.

Meanwhile, for the QoS flow ID to DRB mapping, the base station shall be capable of setting up DRBs including a default DRB based on QoS information being received from the core network. In this specification, the default DRB may correspond to a DRB being used for transmitting a QoS flow that is not mapped to any DRB according to the QoS flow ID to DRB mapping rule. Additionally, if an incoming UL packet does not match a QoS flow ID to DRB mapping, the UE may map the corresponding UL packet to a default DRB of a PDU session. Alternatively, if an incoming UL packet does not match a QoS flow ID to DRB mapping and is not even configured nor determined via reflective QoS, the UE may map the corresponding UL packet to a default DRB of a PDU session. In order to support such UE operations, the base station may configure a default DRB of a PDU session based on QoS information received from the core network and may transmit the corresponding information to the UE.

In order to configure the default DRB, the base station needs to know the QoS information. For example, the QoS information may correspond to a NAS-level QoS profile for a QoS rule or a NAS-level QoS profile for setting a default DRB. However, since the current base station can only receive QoS information of QoS rules, such as default QoS rule and pre-authorized QoS rule, the base station cannot identify whether or not the received QoS information belongs to the default QoS rule. More specifically, even if the base station receives the QoS information, the base station cannot know whether or not the received QoS information corresponds to QoS information for configuring the default DRB. Additionally, although the base station may configure the default DRB by using a QoS profile regardless of the default QoS rule and the pre-authorized QoS rule, among the received rules, the base station cannot determine which QoS profile is to be used for configuring the default DRB. Accordingly, a problem may occur in that the base station cannot configure a default DRB based on the QoS information received from the core network. This problem may also occur during a handover procedure. More specifically, a target base station cannot identify which QoS information, among the information received from a source base station, is related to the default QoS rule and cannot identify which QoS information corresponds to a default QoS profile. Hereinafter, according to the exemplary embodiment of the present invention, a method of configuring a default DRB by a base station and an apparatus (or device) supporting the same will be described in detail.

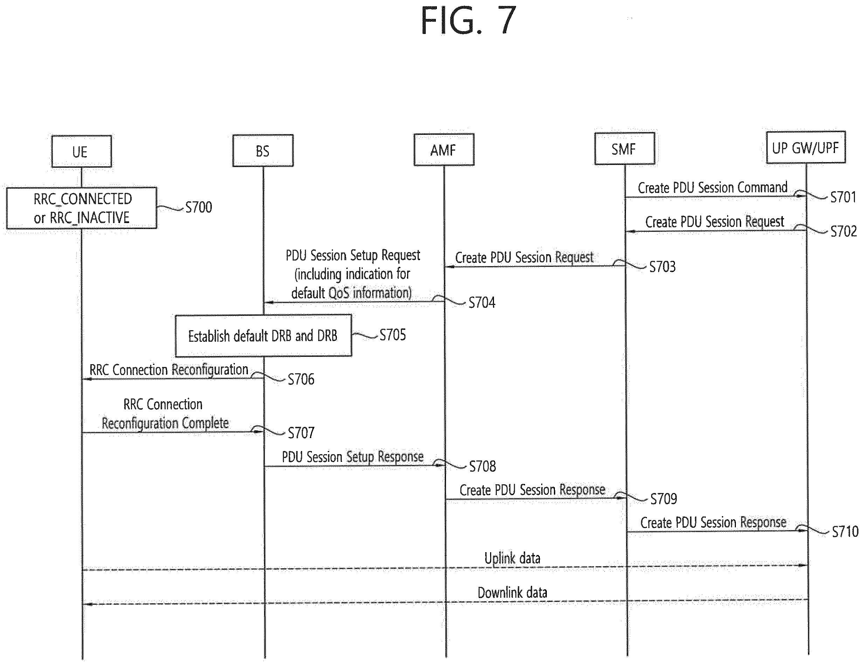

FIG. 7 shows a method for establishing a default DRB by a base station in a PDU session setup procedure according to an exemplary embodiment of the present invention.

Referring to FIG. 7, in step S700, a UE may be in an RRC_CONNECTED state or an RRC_INACTIVE state.

In step S701, according to a request made by a UE or a core network, a PDU session setup procedure may be triggered. An SMF may transmit a Create PDU Session Command message including a default QoS rule to a User Plane Gateway (UPGW) or UPF. The Create PDU Session Command message may be transmitted to bind the received packet to the QoS flow. The Create PDU Session Command message may include a pre-authorized QoS rule.

In step S702, when the Create PDU Session Command message is received from the SMF, the UPGW or UPF may allocate a TNL address and a UPGW address corresponding to an established PDU session. Thereafter, the UPGW or UPF may provide the corresponding information to the SMF by using a Create PDU Session Request message.

In step S703, when the Create PDU Session Request message is received from the UPGW or UPF, the SMF may transmit a Create PDU Session Request message including the default QoS rule to an AMF. The Create PDU Session Request message may include a pre-authorized QoS rule. Additionally, the TNL address and the UPGW address, which is provided by the UPGW or UPF, may be included in the Create PDU Session Request message.

In step S704, when the Create PDU Session Request message is received from the SMF, the AMF may transmit a PDU Session Setup Request message including the UPGW address, the TNL address, and the QoS information to the base station. The base station may correspond to a gNB. The QoS information may correspond to a QoS profile. Additionally, the PDU Session Setup Request message may provide an indication (or indicator) for the default QoS information. The indication for the default QoS information may correspond to an indication for notifying to the base station that the QoS information being provided by the AMF is included in the default QoS rule. Alternatively, the indication for the default QoS information may correspond to an indication for notifying to the base station that the QoS information being provided by the AMF corresponds to a default QoS profile. The default QoS profile may correspond to a NAS-level QoS profile, which is used by the base station for setting up the default DRB. Additionally, the PDU Session Setup Request message may include a NAS message including a QoS rule, which is provided by the SMF.

In step S705, when the PDU Session Setup Request message is received from the AMF, and if resources are available for the requested configuration, the base station (or gNB) shall execute the requested PDU session configuration. Based on the indication and QoS information and an indication received from the AMF, the base station establishes one or more DRB including a default DRB and allocates the required resources on an interface between the base station and the UE.

In step S706, the base station provides the information related to default DRB and DRB(s) established by the base station to the UE. The information may be provided to the UE through an RRC Connection Reconfiguration message. Additionally, the base station forwards to the UE a NAS message including the QoS rule(s). The NAS message including the QoS rule(s) may be transferred to the UE by using the RRC Connection Reconfiguration message.

In step S707, the UE may transmit an RRC Connection Reconfiguration Complete message to the base station.

In step S708, if the RRC Connection Reconfiguration message is received from the UE, the base station may transmit to the AMF a PDU Session Setup Response message including a TNL address, which is allocated by the base station. The PDU Session Setup Response message may be transmitted to the AMF in order to indicate that the requested PDU session is established.

In step S709, when the PDU Session Setup Response message is received from the base station, the AMF may respond to the SMF by using the Create PDU Session Response message. The PDU Session Setup Response message may include a TNL address, which is provided by the base station.

In step S710, when the Create PDU Session Response message is received from the AMF, the SMF may transmit to the UPGW or UPF a Create PDU Session Response message the TNL address, which is allocated by the base station.

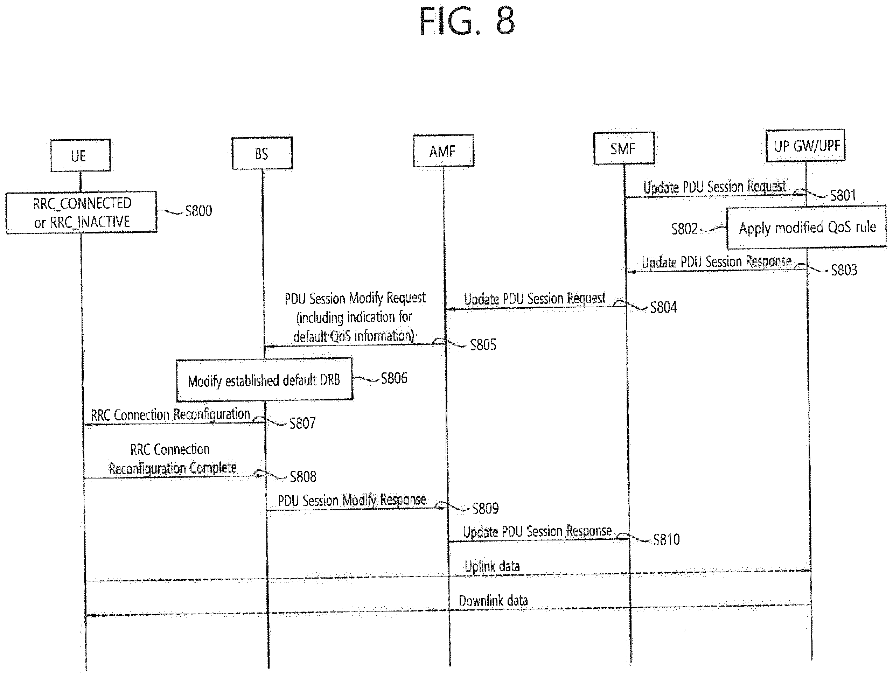

FIG. 8 shows a method for establishing a default DRB by a base station in a PDU session modification procedure according to an exemplary embodiment of the present invention.

Referring to FIG. 8, in step S800, a UE may be in an RRC_CONNECTED state or an RRC_INACTIVE state.

In step S801, according to a request made by a UE or core network, a PDU Session Modification procedure may be triggered. When a default QoS rule for the PDU session needs to be modified, the SMF may transmit to the UPGW or the UPF an Update PDU Session Request message including a modified default QoS rule. The Update PDU Session Request message may be transmitted in order to allow the UPGW or the UPF to apply the changed (or modified) QoS rule. The Update PDU Session Request message may include a modified pre-authorized QoS rule.

In step S802, when receiving the Update PDU Session Request message from the SMF, the UPGW or UPF may apply the newly received QoS rule to a data transmission for the PDU session toward (or targeted to) a base station (or gNB).

In step S803, the UPGW or UPF may respond to the SMF by sending an Update PDU Session Response message.

In step S804, when the Update PDU Session Response message is received from the UPGW or UPF, the SMF may transmit to the AMF an Update PDU Session Request message including a modified default QoS rule. The Update PDU Session Request message may include a modified pre-authorized QoS rule.

In step S805, when receiving the Update PDU Session Request message from the SMF, the AMF may transmit to the base station a PDU Session Modify Request message including the changed default QoS information. The changed default QoS information may correspond to a QoS profile. Additionally, the PDU Session Modify Request message may provide an indication (or indicator) for the default QoS information. The indication for the default QoS information may correspond to an indication for notifying to the base station that the QoS information being provided by the AMF is included in the default QoS rule. Alternatively, the indication for the default QoS information may correspond to an indication for notifying to the base station that the QoS information being provided by the AMF corresponds to a default QoS profile. The default QoS profile may correspond to a NAS-level QoS profile, which is used by the base station for setting up the default DRB. Additionally, the PDU Session Modify Request message may include a NAS message including a QoS rule, which is provided by the SMF.

In step S806, when receiving the PDU Session Modify Request message from the AMF, and if resources are available for the requested target configuration, the base station (or gNB) shall execute the modification of the requested PDU session configuration. Based on the indication and QoS information received from the AMF, the base station may modify the DRB configuration including an established default DRB and may change allocation of resources on an interface between the base station and the UE according to the new resource request.

In step S807, the base station may provide the information related to default DRB and DRB(s), which are modified by the base station, to the UE through an RRC Connection Reconfiguration message. Also, the base station may forward to the UE a NAS message including the modified QoS rule(s) by using the RRC Connection Reconfiguration message.

In step S808, the UE may transmit an RRC Connection Reconfiguration Complete message to the base station

In step S809, when the RRC Connection Reconfiguration Complete message is received from the UE, the base station may transmit to the AMF a PDU Session Modify Response message. The PDU Session Modify Response message may be transmitted to the AMF in order to indicate a successful completion of the PDU session modification.

In step S810, when the PDU Session Modify Response message is received from the base station, the AMP may respond to the SMF by sending an Update PDU Session Response message.

According to the exemplary embodiment of the present invention, the AMF may notify to the base station which QoS information belongs to the default QoS rule. Alternatively, the AMP may notify to the base station which QoS information corresponds to the default QoS profile. For example, according to the exemplary embodiment of the present invention, the QoS information or QoS profile may be defined as shown below in Table 1.

**[Table 1]**

| IE/Group Name | Presence | IE type and reference | Semantics description |
|---|---|---|---|
| 5QI | O | INTEGER (0..255) | |
| Allocation and Retention Priority | M | | |
| Non-standardised QoS Flow descriptor | O | | |
| GBR QoS Flow Information | O | | This IE applies to GBR bearers only and shall be ignored otherwise. |
| Notification Control | O | ENUMERATED (notification requested, ...) | |
| RQA | O | ENUMERATED (subject to, ...) | Reflective QoS Attribute: indicates that certain traffic on this QoS flow may be subject to NAS reflective QoS. This IE applies to non-GBR bearers only and shall be ignored otherwise. |
| Most probable QoS profile | O | ENUMERATED (most probable, ...) | Indicates the QoS flow for which the traffic is the most probable for this PDU session. |

The AMF may indicate to the base station a most preferred QoS flow in the PDU session by using a 'Most probable QoS profile' IE, and the base station may establish a default DRB based on the Most probable QoS profile' IE. In this specification, the 'Most probable QoS profile' IE, the indication for establishing the default DRB, or the indication for the default QoS information may be used as the same concept. Therefore, the base station may know which QoS information corresponds to the QoS information for establishing the default DRB, and, then, the base station may establish the default DRB by using the QoS information for establishing the default DRB. Furthermore, the UE may map an incoming UL packet, which does not match the QoS flow to DRB mapping, to the default DRB of the PDU session. And, based on the core network signaling, the base station may know whether the received QoS information is related to the default QoS rule or whether the received QoS information corresponds to the default QoS profile.

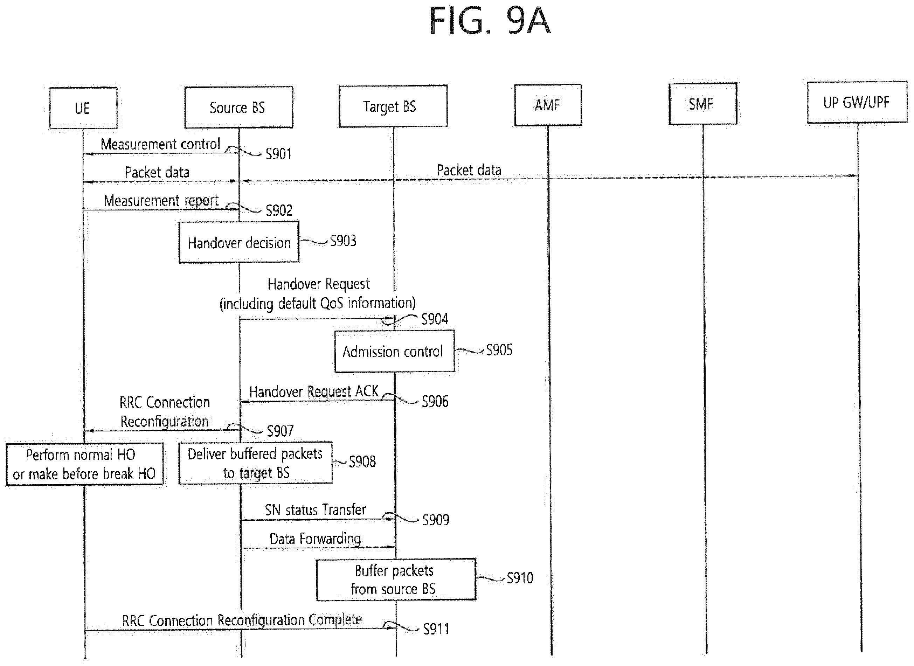

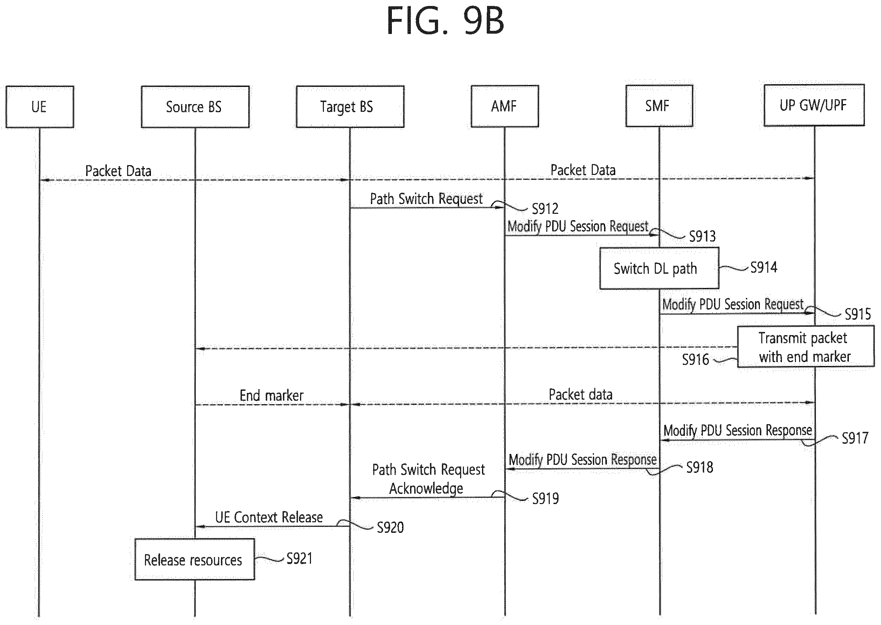

FIG. 9a and FIG. 9b show a method for establishing a default DRB by a base station in a handover procedure according to an exemplary embodiment of the present invention.

According to the procedure proposed in FIG. 9a and FIG. 9b, when handover of a UE between is performed between adjacent base stations (or gNBs) having an Xn interface, a source base station may notify to a target base station which QoS profile is related to the default QoS rule. Alternatively, the source base station may notify to a target base station which QoS profile corresponds to the default QoS profile. An Xn handover procedure may be used for the notification, and, in this case, the source base station may transfer (or forward) the default QoS information to the target base station via the Xn interface. Alternatively, an NG handover procedure, which is similar to the legacy S1 handover procedure, may be used for the notification, and, in this case, the source base station may transfer (or forward) the default QoS information to the target base station via a 5G core node, such as an AMF. It may be assumed that the base station serving the UE knows which QoS profile is related to the default QoS rule or which QoS profile corresponds to the default QoS profile within the PDU session(s) established for the UE. It may be assumed that the default QoS profile corresponds to a QoS profile being used by the base station for setting up the default DRB. Hereinafter, according to the exemplary embodiment shown in FIG. 9, although a procedure in which the default QoS information is being forwarded during an Xn handover procedure is described, the present invention will not be limited only to this. And, therefore, the default QoS information may also be forwarded during other handover procedures, such as the NG handover.

Referring to FIG. 9a, in step S901, a source base station (or gNB) may configure UE measurement procedures. A Measurement Control message may be transmitted from the source base station to the UE.

In step S902, a Measurement Report message may be triggered and transmitted to the source base station.

In step S903, when the Measurement Report message is received, the source base station may determine (or decide) handover of the UE based on the measurement report and RRM information.

In step S904, the source base station may transmit to a target base station a Handover Request message. The target base station may correspond to a gNB. The Handover Request message may include default QoS information indicating which QoS profile, among QoS profiles within the PDU session, is related to a default QoS rule. Alternatively, the Handover Request message may include default QoS information indicating which QoS profile, among QoS profiles within the PDU session, corresponds to a default QoS profile. If a plurality of PDU sessions are established for the UE, the default QoS information may be provided to the target base station for each PDU session via the Handover Request message.

In step S905, when receiving the Handover Request message from the source base station, based on the received PDU session QoS information, the target base station may perform admission control and configure the required resources. If the Handover Request message contains the default QoS information, based on the default QoS information, the target base station may establish the default DRB for the UE. If the Handover Request message includes multiple PDU sessions having the default QoS information, the target base station may establish the default DRB for each PDU session or may establish one default DRB for selected default QoS information among the received ones considering the resource condition of the target base station. In addition, the target base station shall allocate the required resources for default QoS profile first among QoS profiles within the PDU session.

In step S906, the target base station transmits to the source base station a Handover Request Acknowledge (ACK) message as a response to the Handover Request message. If the target base station does not allocate the resources required for the default QoS profile for the PDU session, the corresponding PDU session may be included in a Not Admitted List of the Handover Request ACK message. In this case, the target base station may not establish the default DRB for the corresponding PDU session. The information related to the setup of the default DRB may be transmitted to the UE via the source base station, so that the UE can be capable of establishing the default DRB.

In step S907, when the Handover Request ACK message is received from the target base station, the source base station may generate an RRC Connection Reconfiguration message including a transparent container, which is to be transmitted to the UE as an RRC message for performing the handover. When the RRC Connection Reconfiguration message is received, the UE may perform a normal handover, which releases the RRC connection with the source base station, or a make before break handover without connection release until establishing the RRC connection with the target base station. Also, the UE may establish the default DRB.

In step S908, the source base station may buffer uplink data, which is to transmitted to the core network (CN), and downlink data, which is to be sent to the UE. If the source base station supports the make before break handover, the source base station may transmit the downlink data to the UE or receive the uplink data, which is to be sent to the core network.

In step S909, the source base station may transmit an SN Status Transfer message to the target base station.

In step S910, after receiving the SN Status Transfer message, the target base station may buffer packets, which are forwarded from the source base station.

In step S911, when the UE successfully accesses the target base station, the UE may transmit to the target base station an RRC Connection Reconfiguration Complete message for confirming the handover. When the RRC Connection Reconfiguration Complete message is received, the target base station may initiate transmission of the buffered packets to the UE.

Referring to FIG. 9b, in step S912, the target base station may transmit, to an Access and Mobility Management Function (AMF), a downlink Path Switch Request message including a downlink TEID, which is allocated by the target base station to inform that the UE has changed the base station.

In step S913, when the downlink Path Switch Request message is received from the target base station, the AMF may determine that an SMF may continue to serve the UE. Thereafter, the AMF may transmit to the corresponding SMF a Modify PDU Session Request message including the downlink TEID in order to request switching of a downlink path to the target base station.

In step S914, when the Modify PDU Session Request message is received from the AMF, the SMF may determine (or decide) to switch the downlink path toward the target base station and select an appropriate UPGW or UPF, which conveys (or forwards) downlink packets to the target base station.

In step S915, the SMF may transmit to a selected UPGW or UPF the Modify PDU Session Request message including the downlink TEID in order to release any user plane/TNL resources towards the source base station.

In step S916, when the Modify PDU Session Request message is received, the UPGW or UPF may transmit one or more "end marker" packets over a previous old path to the source base station, and, then, the UPGW or UPF may release any random user plane/TNL resources towards the source base station.

In step S917, the UPGW or UPF may transmit a Modify PDU Session Response message to the SMF.

In step S918, when the Modify PDU Session Response message is received from the UPGW or UPF, the SMF may transmit the Modify PDU Session Response message to the AMF.

In step S919, when the Modify PDU Session Response message is received from the SMF, the AMF may transmit to the target base station a Path Switch Request Acknowledge (ACK) message in order to inform that a downlink path switch toward the target base station is completed.

In step S920, when the Path Switch Request Acknowledge message is received from the AMF, the target base station may transmit to the source base station a UE Context Release message in order to indicate success in handover to the source base station and to initiate the release of resources, which is performed by the source base station.

In step S921, when the UE Context Release message is received from the target base station, the source base station may release radio and control plane related resources, which are associated to the UE context.

According to the exemplary embodiment of the present invention, in case the UE performs handover to the target base station, a UE within the target base station may map an incoming UL packet, which does not match the QoS flow to DRB mapping to the default DRB of the PDU session. Furthermore, the base station may ensure service continuity for an uplink packet transmission of the UE during the handover, and the target base station may know which QoS profile, among the QOS profiles for the received PDU session(s), is related to the default QoS rule or which profile corresponding to the default DRB profile.

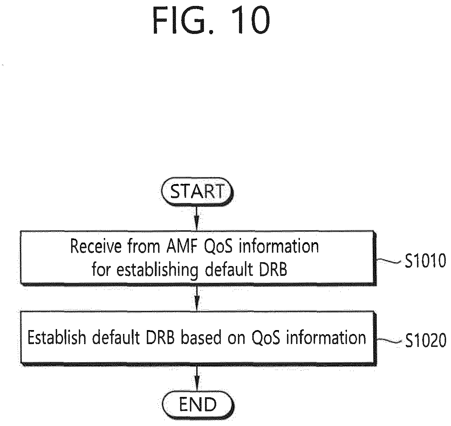

FIG. 10 shows a method for establishing a default DRB by a base station according to an exemplary embodiment of the present invention.

Referring to FIG. 10, in step S1010, the base station may receive QoS information for establishing a default DRB from an AMF. Additionally, the base station may receive an indication (or indicator) indicating that the QoS information is included in a default QoS rule for establishing the default DRB from the AMF. Additionally, the base station may receive an indication indicating that the QoS information corresponds to a default QoS profile for establishing the default DRB. The default QoS profile may correspond to a NAS-level QoS profile, which is used by the base station for establishing the default DRB.

In step S1020, the base station may establish the default DRB based on the QoS information. The default DRB may correspond to a DRB, which is used for transmitting a QoS flow that is not mapped to the DRB. Whether or not the QoS flow is mapped to the DRB may be determined based on QoS Flow ID to DRB mapping.

The default DRB may establish a protocol data unit (PDU) session during a setup procedure. QoS flows being included in the established PDU session may be mapped to multiple DRBs, and the default DRB may correspond to any one of the multiple DRBs. Additionally, the base station may receive an indication indicating a QoS flow for a most probable traffic within the established PDU session. In this case, the default DRB may correspond to a DRB that is used for transmitting a QoS flow for the most probable traffic.

The default DRB may be established during a procedure of modifying the PDU session.

Additionally, the base station may transmit information on the established default DRB to the UE.

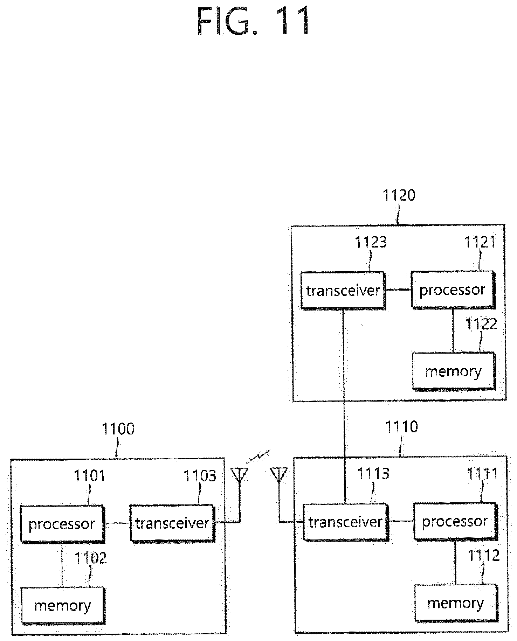

FIG. 11 is a block diagram illustrating a wireless communication system according to the embodiment of the present invention.

A UE (1100) includes a processor (1101), a memory (1102), and a transceiver (1103). The memory (1102) is connected to the processor (1101), and stores various information for driving the processor (1101). The transceiver (1103) is connected to the processor (1101), and transmits and/or receives radio signals. The processor (1101) implements proposed functions, processes and/or methods. In the above embodiment, an operation of the user equipment may be implemented by the processor (1101).

A BS (1110) includes a processor (1111), a memory (1112), and a transceiver (1113). The memory (1112) is connected to the processor (1111), and stores various information for driving the processor (1111). The transceiver (1113) is connected to the processor (1111), and transmits and/or receives radio signals. The processor (1111) implements proposed functions, processes and/or methods. In the above embodiment, an operation of the BS may be implemented by the processor (1111).

An AMF (1120) includes a processor (1112), a memory (1122), and a transceiver (1123). The memory (1122) is connected to the processor (1121), and stores various information for driving the processor (1121). The transceiver (1123) is connected to the processor (1121), and transmits and/or receives radio signals. The processor (1121) implements proposed functions, processes and/or methods. In the above embodiment, an operation of the AMF may be implemented by the processor (1121).

The processor may include an application-specific integrated circuit (ASIC), a separate chipset, a logic circuit, and/or a data processing unit. The memory may include a read-only memory (ROM), a random access memory (RAM), a flash memory, a memory card, a storage medium, and/or other equivalent storage devices. The transceiver may include a base-band circuit for processing a wireless signal. When the embodiment is implemented in software, the aforementioned methods can be implemented with a module (i.e., process, function, etc.) for performing the aforementioned functions. The module may be stored in the memory and may be performed by the processor. The memory may be located inside or outside the processor, and may be coupled to the processor by using various well-known means.

Various methods based on the present specification have been described by referring to drawings and reference numerals given in the drawings on the basis of the aforementioned examples. Although each method describes multiple steps or blocks in a specific order for convenience of explanation, the invention disclosed in the claims is not limited to the order of the steps or blocks, and each step or block can be implemented in a different order, or can be performed simultaneously with other steps or blocks. In addition, those ordinarily skilled in the art can know that the invention is not limited to each of the steps or blocks, and at least one different step can be added or deleted without departing from the scope and spirit of the invention.

The aforementioned embodiment includes various examples. It should be noted that those ordinarily skilled in the art know that all possible combinations of examples cannot be explained, and also know that various combinations can be derived from the technique of the present specification. Therefore, the protection scope of the invention should be determined by combining various examples described in the detailed explanation, without departing from the scope of the following claims.

## Claims

1. A method for establishing a data radio bearer (DRB) by a base station in a wireless communication system, comprising:
receiving Quality of Service (QoS) information for establishing a default DRB from an access and mobility function (AMF); and
establishing the default DRB based on the QoS information.

2. The method of claim 1, further comprising:
receiving an indication indicating that the QoS information is included in a default QoS rule for establishing the default DRB.

3. The method of claim 1, further comprising:
receiving an indication indicating that the QoS information corresponds to a default QoS profile for establishing the default DRB.

4. The method of claim 3, wherein the default QoS profile corresponds to a non-access stratum (NAS)-level QoS profile being used by the base station for establishing the default DRB.

5. The method of claim 1, wherein the default DRB corresponds to a DRB being used for transmitting a QoS flow that is not mapped to the DRB.

6. The method of claim 5, wherein whether or not the QoS flow is being mapped to the DRB is determined based on a QoS Flow ID to DRB mapping.

7. The method of claim 1, wherein the default DRB is established during a procedure for setting up a protocol data unit (PDU) session.

8. The method of claim 7, wherein QoS flows being included in the established PDU session are mapped to multiple DRBs, and
wherein the default DRB corresponds to any one of the multiple DRBs.

9. The method of claim 8, further comprising:
receiving an indication indicating a QoS flow for a most probable traffic within the established PDU session.

10. The method of claim 9, wherein the default DRB corresponds to a DRB being used for transmitting a QoS flow for the most probable traffic.

11. The method of claim 1, wherein the default DRB is established in a procedure for modifying a PDU session.

12. The method of claim 1, further comprising:
transmitting information on the established default DRB to a user equipment (UE).

13. A base station establishing a data radio bearer (DRB) in a wireless communication system, comprising:
a memory;
a transceiver; and
a processor operatively connecting the memory and the transceiver,
wherein the processor:
controls the transceiver so as to allow the transceiver to receive Quality of Service (QoS) information for establishing a default DRB from an access and mobility function (AMF), and
establishes the default DRB based on the QoS information.

14. The base station of claim 13, wherein the processor controls the transceiver so as to allow the transceiver to receive an indication indicating that the QoS information is included in a default QoS rule for establishing the default DRB.

15. The base station of claim 13, wherein the processor controls the transceiver so as to allow the transceiver to receive an indication indicating that the QoS information corresponds to a default QoS profile for establishing the default DRB.
